# EUROPEAN PATENT APPLICATION

(11) **EP 4 224 907 A1**
(43) Date of publication of application: **09.08.2023**
(21) Application number: 21874453.0
(22) Date of filing: 28.09.2021
(51) Int. Cl.: H04W 24/02

(54) **RELAY COMMUNICATION INFORMATION CONFIGURATION METHOD AND APAPRATUS, AND ELECTRONIC DEVICE**

(30) Priority: 29.09.2020 CN 202011069824
(71) Applicant: Vivo Mobile Communication Co., Ltd., Dongguan, Guangdong 523863 (CN)
(72) Inventor: WANG, Wen, Dongguan, Guangdong 523863 (CN); KE, Xiaowan, Dongguan, Guangdong 523863 (CN); XIE, Zhenhua, Dongguan, Guangdong 523863 (CN)
(74) Representative: Conti, Marco
(86) International application number: PCT/CN2021/121242
(87) International publication number: WO 2022/068793

(57) **Abstract**

This application discloses a method and an apparatus for configuring relay communication information, and an electronic device, and pertains to the field of communication technologies. The method for configuring relay communication information includes: reporting, by a terminal, a relay communication mode to a network-side device; and receiving, by the terminal, relay communication information from the network-side device, where the relay communication information includes a relay communication policy and/or authorization parameter corresponding to the relay communication mode.

## Description

### CROSS-REFERENCE TO RELATED APPLICATIONS

This application claims priority to Chinese Patent Application No. 202011069824.6, filed on September 29, 2020 in China, which is incorporated herein by reference in its entirety.

### TECHNICAL FIELD

This application relates to the field of communication technologies, and in particular, to a method and an apparatus for configuring relay communication information, and an electronic device.

### BACKGROUND

In relay communication scenarios, a terminal (User Equipment, UE) may support both the layer 2 relay communication mode and the layer 3 relay communication mode. In this case, a network side needs to configure for the UE two sets of policies and parameters for the relay communication modes. However, for some specific occasions or services, the UE may only need to support or tend to use one of the relay communication modes, and one of the two sets of policies and parameters for the relay communication modes is redundant for the UE, and consumes additional resources in later policy and parameter update.

### SUMMARY

Embodiments of this application provide a method and an apparatus for configuring relay communication information, and an electronic device, so as to avoid that a network-side device configures a wrong or redundant relay communication policy or parameter for a terminal.

According to a first aspect, an embodiment of this application provides a method for configuring relay communication information, including:
reporting, by a terminal, a relay communication mode to a network-side device; and
receiving, by the terminal, relay communication information from the network-side device, where the relay communication information includes a relay communication policy and/or authorization parameter corresponding to the relay communication mode.

According to a second aspect, an embodiment of this application provides a method for configuring relay communication information, including:
receiving, by a network-side device, a relay communication mode reported by a terminal; and
transmitting, by the network-side device, relay communication information to the terminal, where the relay communication information includes a relay communication policy and/or authorization parameter corresponding to the relay communication mode.

According to a third aspect, an embodiment of this application provides an apparatus for configuring relay communication information, applied to a terminal and including:
a reporting module, configured to report a relay communication mode to a network-side device; and
a receiving module, configured to receive relay communication information from the network-side device, where the relay communication information includes a relay communication policy and/or authorization parameter corresponding to the relay communication mode.

According to a fourth aspect, an embodiment of this application provides an apparatus for configuring relay communication information, applied to a network-side device and including:
a receiving module, configured to receive a relay communication mode reported by a terminal; and
a transmitting module, configured to transmit relay communication information to the terminal, where the relay communication information includes a relay communication policy and/or authorization parameter corresponding to the relay communication mode.

According to a fifth aspect, an embodiment of this application further provides an electronic device, including a processor, a memory, and a program or instructions stored in the memory and capable of running on the processor, where when the program or instructions are executed by the processor, the steps of the foregoing method are implemented.

According to a sixth aspect, an embodiment of this application provides a readable storage medium, where the readable storage medium stores a program or instructions, and when the program or instructions are executed by a processor, the steps of the foregoing method are implemented.

According to a seventh aspect, an embodiment of this application provides a chip, where the chip includes a processor and a communication interface, the communication interface is coupled to the processor, and the processor is configured to run a program or instructions to implement the method according to the first aspect or the second aspect.

In the embodiments of this application, the terminal may report a relay communication mode that the terminal supports and/or tends to use to the network-side device, so that the network-side device configures a relay communication policy and/or authorization parameter for the terminal based on the relay communication mode that the terminal supports and/or tends to use. This avoids that the network-side device configures a wrong or redundant relay communication policy and/or authorization parameter for the terminal.

### BRIEF DESCRIPTION OF DRAWINGS

To describe technical solutions in embodiments of this application more clearly, the following briefly describes the accompanying drawings required for describing the embodiments of this application. Apparently, the accompanying drawings in the following descriptions merely show some embodiments of this application, and persons of ordinary skill in the art may still derive other drawings from these accompanying drawings without creative efforts.
FIG. 1 is a schematic diagram of a wireless communication system;
FIG. 2 is a schematic flowchart of a method for configuring relay communication information on a terminal side according to an embodiment of this application;
FIG. 3 is a schematic flowchart of a method for configuring relay communication information on a network side according to an embodiment of this application;
FIG. 4 to FIG. 6 are schematic diagrams of signaling interaction of a method for configuring relay communication information according to an embodiment of this application;
FIG. 7 is a schematic structural diagram of an apparatus for configuring relay communication information on a terminal side according to an embodiment of this application;
FIG. 8 is a schematic structural diagram of an apparatus for configuring relay communication information on a network side according to an embodiment of this application;
FIG. 9 is a schematic diagram of composition of a terminal according to an embodiment of this application; and
FIG. 10 is a schematic diagram of composition of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, in this specification and claims, "and/or" represents at least one of connected objects, and the character "/" generally represents an "or" relationship between associated objects.

The technologies described in this specification are not limited to long term evolution (Long Term Evolution, LTE)/LTE-advanced (LTE-Advanced, LTE-A) systems, and may also be used in various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably. The CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system can implement radio technologies such as the global system for mobile communications (Global System for Mobile Communication, GSM). The OFDMA system can implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are parts of a universal mobile telecommunications system (Universal Mobile Telecommunications System, UMTS). LTE and more advanced LTE (such as LTE-A) are new UMTS versions that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technologies described in this specification may be used in the above-mentioned systems and radio technologies as well as other systems and radio technologies. However, in the following descriptions, an NR system is described for an illustration purpose, and NR terms are used in most of the following descriptions, although these technologies may also be applied to other applications than an NR system application.

The following descriptions provide examples without limiting the scope, applicability, or configuration set forth in the claims. The functions and arrangements of the elements under discussion may be changed without departing from the spirit and scope of the present disclosure. In the examples, various procedures or components may be appropriately omitted, replaced, or added. For example, the described method may be performed in a sequence different from the described sequence, and steps may be added, omitted, or combined. In addition, features described with reference to some examples may be combined in other examples.

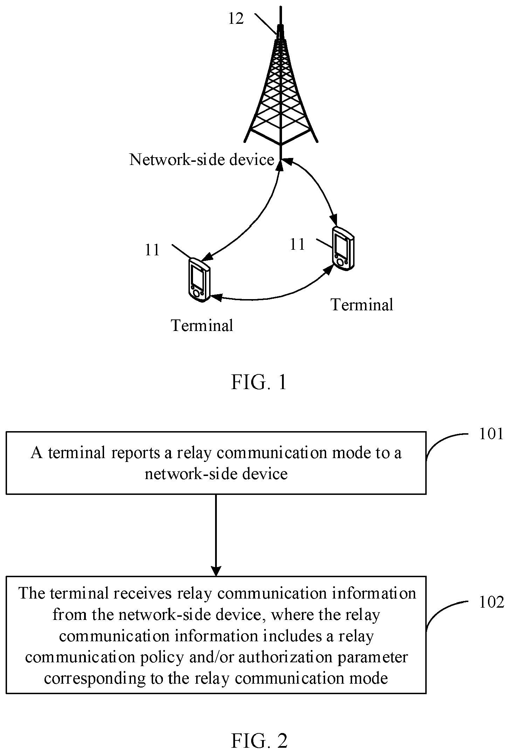

Referring to FIG. 1, FIG. 1 is a block diagram of a wireless communication system to which the embodiments of this application are applicable. The wireless communication system includes a terminal 11 and a network-side device 12. The terminal 11 may also be referred to as a terminal device or user terminal (User Equipment, UE). The terminal 11 may be a terminal-side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It should be noted that the terminal 11 is not limited to a specific type in the embodiments of this application. The network-side device 12 may be a base station or a core network, where the base station may be a base station of 5G or a later version (for example, gNB or 5G NR NB), or a base station in other communication systems (for example, an eNB, a WLAN access point, or another access point), or a location server (for example, E-SMLC or LMF (Location Manager Function)). The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, or some other appropriate term in the art. As long as the same technical effect is achieved, the base station is not limited to a specific technical term. It should be noted that the base station in the NR system is taken only as an example in the embodiments of this application, but a specific type and a specific communication system of the base station are not limited in the embodiments of this application.

In the related art, the following information is provisioned in UE in support of the LTE assuming the role of a proximity service (ProSe) LTE-to-network relay.
(1) Authorization policy for acting as a ProSe UE-to-network relay (ProSe UE-to-Network Relay)
   Public land mobile networks (Public Land Mobile Network, PLMN) in which the UE is authorized to relay traffic for ProSe remote UE.
(2) ProSe relay discovery policy and/or parameter for ProSe UE-to-network relay
   including parameters that enable the UE to perform ProSe relay discovery as a LTE-to-network relay when configured from a policy control function (Policy Control Function, PCF) in mobile equipment (ME) or configured in a universal integrated circuit card (Universal Integrated Circuit Card, UICC);
   including an indication of serving as a UE-to-Network relay;
   including parameters for ProSe UE-to-network relay discovery (including user information identifier ID and relay service code), where
   for the layer 3 relay communication mode, each relay service in ProSe relay service code uses protocol data unit (Protocol Data Unit, PDU) session parameters (including PDU session type, data network name (data network name, DNN), session and service continuity (session and service continuity, SSC) mode, single network slice selection assistance information (Single Network Slice Selection Assistance Information, S-NSSAI), and access type preference (Access Type Preference)), and
   whether related PDU session parameters are included depends on a solution conclusion to UE-to-network relay discovery, for example, these parameters are not required if associated PDU session parameters are negotiated between remote UE and the UE-to-network relay in a PC5 communication setup phase; and
   including security related content for ProSe relay discovery for each ProSe relay service code.
(3) Quality of service (Quality of Service, QoS) mapping rules for layer 3 relay communication mode
   including rules that determine how the ProSe UE-to-network relay maps a 5QI of a QoS flow over NR Uu into a ProSe PQI value over NR PC5, and
   optionally, including PC5 QoS mapping rules for a UE-to-network relay service.

Which QoS mapping rule is provided depends on a concluded QoS handling solution in UE-to-network relay.

Further, the following information is provisioned in UE in support of the UE assuming the role of remote UE and thereby enabling the use of a ProSe UE-to-network relay.
(1) Authorization policy for acting as remote UE
   indicating whether UE is authorized to access a core network via a ProSe UE-to-network relay.
(2) Policy and/or parameters for ProSe relay discovery and for enabling connection to the ProSe LTE-to-network relay after discovery when configured from a PCF in ME or configured in UICC
   including parameters for ProSe UE-to-network relay discovery (including user information identifier ID and relay service code), where
   for the layer 3 relay communication mode, each relay service in ProSe relay service code uses PDU session parameters (including PDU session type, DNN, SSC mode, S-NSSAI, and access type preference), and
   whether related PDU session parameters are included depends on a solution conclusion to UE-to-network relay discovery, for example, these parameters are not required if associated PDU session parameters are negotiated between remote UE and the UE-to-network relay in a PC5 communication setup phase; and
   including security related content for ProSe relay discovery for each ProSe relay service code.

In relay communication scenarios, UE may support both the layer 2 relay communication mode and the layer 3 relay communication mode. Certainly, it is not ruled out that the UE supports only one of the relay communication modes. Different policies and parameters are configured for the LTE in different relay communication modes. For example, current service code needing to reflect DNN or slice information, and this obviously applicable to the layer 3 relay communication mode rather than the layer 2 relay communication mode, or QoS mappings need to be configured for the UE in the layer 3 relay communication mode rather than the layer 2 relay communication mode. Therefore, it is necessary for a network side to know a relay communication mode supported by the UE so that the network side determines and configures a policy and parameters for the LTE based on the relay communication mode.

Alternatively, UE supports two relay communication modes, but out of the consideration of service continuity, service security, payment, and the like, the UE may tend to use one of the relay communication modes. Therefore, it is necessary for the network side to know a relay communication mode that the UE may tend to use, so that the network side determines and configures a policy and parameters for the UE based on the relay communication mode.

An embodiment of this application provides a method for configuring relay communication information. As shown in FIG. 2, the method includes the following steps.

Step 101. A terminal reports a relay communication mode to a network-side device.

Step 102. The terminal receives relay communication information from the network-side device, where the relay communication information includes a relay communication policy and/or authorization parameter corresponding to the relay communication mode.

In this embodiment of this application, the terminal may report a relay communication mode that the terminal supports and/or tends to use to the network-side device, so that the network-side device configures a relay communication policy and/or authorization parameter for the terminal based on the relay communication mode that the terminal supports and/or tends to use. This avoids that the network side configures a wrong or redundant relay communication policy and/or authorization parameter for the terminal because the network side does not know the relay communication mode supported by the terminal. Alternatively, this avoids that the network side configures a wrong or redundant relay communication policy and/or authorization parameter for the terminal because the network side does not know the relay communication mode that the terminal tends to use (UE may choose a relay communication mode from the perspective of service security, service continuity, payment, and the like).

In some embodiments, a terminal reports a relay communication mode to a network-side device, comprising: the terminal includes the 5G ProSe Capability as part of the "5GMM capability" in the Registration Request message for the network-side device. And the "5GMM capability" is used to indicate a relay communication mode. For example, the 5G ProSe Capability indicates whether the UE is capable of one or more of the following ProSe capabilities: 5G ProSe Direct Discovery, 5G ProSe Direct Communication, 5G ProSe UE-to-Network Relay (Layer-2 and/or Layer-3), and 5G ProSe Remote terminal (Layer-2 and/or Layer-3).

In some embodiments, that a terminal reports a relay communication mode to a network-side device includes any one of the following:
transmitting, by the terminal, a registration message to the network-side device, where the registration message carries the relay communication mode; and
transmitting, by the terminal, a policy configuration request message to the network-side device, where the policy configuration request message carries the relay communication mode.

In some embodiments, that the terminal receives relay communication information from the network-side device includes:
receiving, by the terminal, a configuration update command from the network-side device, where the configuration update command includes the relay communication information.

In some embodiments, the relay communication mode includes at least one of the following:
layer 2 relay communication mode; and
layer 3 relay communication mode.

In some embodiments, the relay communication mode reported by the terminal includes a relay communication mode supported by the terminal and/or a relay communication mode that the terminal tends to use.

In some embodiments, the relay communication policy and/or authorization parameter includes at least one of the following:
a relay discovery policy;
a relay discovery authorization parameter;
a relay connection establishment policy; and
a parameter for relay connection establishment authorization.

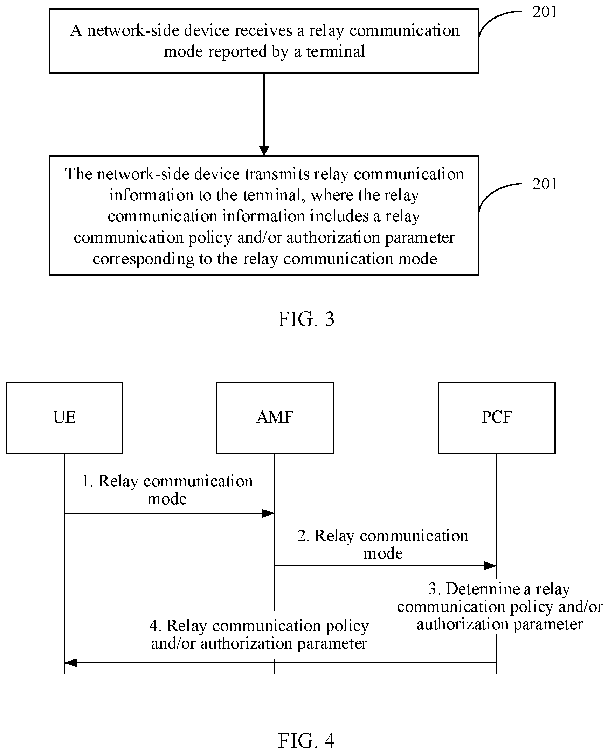

An embodiment of this application provides a method for configuring relay communication information. As shown in FIG. 3, the method includes the following steps.

Step 201. A network-side device receives a relay communication mode reported by a terminal.

Step 202. The network-side device transmits relay communication information to the terminal, where the relay communication information includes a relay communication policy and/or authorization parameter corresponding to the relay communication mode.

In this embodiment of this application, the terminal may report a relay communication mode that the terminal supports and/or tends to use to the network-side device, so that the network-side device configures a relay communication policy and/or authorization parameter for the terminal based on the relay communication mode that the terminal supports and/or tends to use. This avoids that the network side configures a wrong or redundant relay communication policy and/or authorization parameter for the terminal because the network side does not know the relay communication mode supported by the terminal. Alternatively, this avoids that the network side configures a wrong or redundant relay communication policy and/or authorization parameter for the terminal because the network side does not know the relay communication mode that the terminal tends to use (UE may choose a relay communication mode from the perspective of service security, service continuity, payment, and the like).

In some embodiments, the network-side device includes an access and mobility management function AMF and a policy control function PCF, and that a network-side device receives a relay communication mode reported by a terminal includes any one of the following:
receiving, by the AMF, a registration message from the terminal, where the registration message carries the relay communication mode, and transmitting, by the AMF, the relay communication mode to the PCF through a terminal policy control creation request or a terminal policy control update request; and
receiving, by the AMF, a policy configuration request message from the terminal, where the policy configuration request message carries the relay communication mode, and transmitting, by the AMF, the relay communication mode to the PCF through a terminal policy control update request.

In some embodiments, that the network-side device transmits relay communication information to the terminal includes:
determining, by the PCF, relay communication information corresponding to the relay communication mode based on the relay communication mode reported by the terminal; and
transmitting, by the PCF, a configuration update command to the terminal, where the configuration update command includes the relay communication information.

In some embodiments, the relay communication mode includes at least one of the following:
layer 2 relay communication mode; and
layer 3 relay communication mode.

In some embodiments, the relay communication mode reported by the terminal includes a relay communication mode supported by the terminal and/or a relay communication mode that the terminal tends to use.

In some embodiments, the relay communication policy and/or authorization parameter includes at least one of the following:
a relay discovery policy;
a relay discovery authorization parameter;
a relay connection establishment policy; and
a parameter for relay connection establishment authorization.

In this embodiment, as shown in FIG. 4, UE reports the relay communication mode to the network-side device, and the network-side device determines the relay communication policy and/or authorization parameter based on the relay communication mode reported by the UE, and provides the relay communication policy and/or authorization parameter to the UE.

During registration, the UE may carry the relay communication mode in a registration message, an AMF reports the relay communication mode to a PCF, and the PCF determines the relay communication policy and/or authorization parameter corresponding to the relay communication mode and provides the relay communication policy and/or authorization parameter to the UE. Alternatively, in a policy configuration procedure triggered by the UE, the UE carries the relay communication mode in a policy configuration request message, an AMF reports the relay communication mode to a PCF, and the PCF determines the relay communication policy and/or authorization parameter corresponding to the relay communication mode and provides the relay communication policy and/or authorization parameter to the UE.

The relay communication mode reported by the terminal embodies two meanings: a relay communication mode supported by the UE and a relay communication mode that the UE tends to use. The relay communication mode includes layer 2 relay communication mode, layer 3 relay communication mode, and layer 2 and layer 3 relay communication modes. The relay communication policy and authorization parameter include policies and parameters for relay discovery, relay connection establishment, and the like.

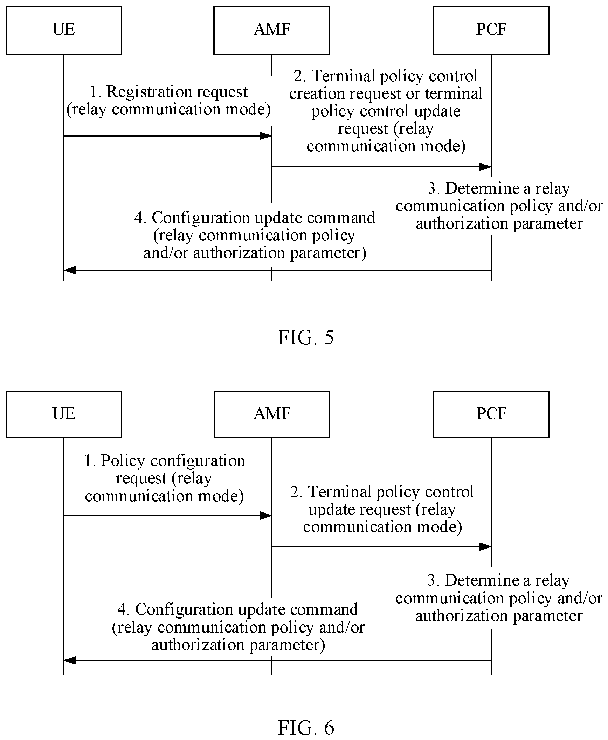

In an embodiment, the UE carries the relay communication mode in a registration request message during registration, an AMF reports the relay communication mode to a PCF, and the PCF determines the policy and authorization parameter corresponding to the relay communication mode and provides the policy and authorization parameter to the UE. As shown in FIG. 5, the UE transmits the registration request message carrying the relay communication mode to the AMF. The relay communication mode indicates a relay communication mode supported by the UE or a relay communication mode that the UE tends to use. If the relay communication mode includes the layer 2 relay communication mode, it means that the UE supports the layer 2 relay communication mode or tends to use the layer 2 relay communication mode. If the relay communication mode includes the layer 3 relay communication mode, it means that the UE supports the layer 3 relay communication mode or tends to use the layer 3 relay communication mode. If the relay communication mode includes the layer 2 and layer 3 relay communication modes, it means that the LTE supports both the two relay communication modes or tends to use both the two relay communication modes.

Afterwards, the AMF reports, to the PCF, the relay communication mode reported by the UE, and the PCF determines, based on the relay communication mode reported by the UE, the relay communication policy and authorization parameter corresponding to the relay communication mode, and the PCF configures the relay communication policy and authorization parameter to the LTE through a configuration update procedure.

In another embodiment, the UE carries the relay communication mode in a policy configuration request message in a policy configuration procedure triggered by the UE, an AMF reports the relay communication mode to a PCF, and the PCF determines the policy and authorization parameter corresponding to the relay communication mode and provides the policy and authorization parameter to the UE.

As shown in FIG. 6, in a case that the UE needs to update a relay communication policy and authorization parameter of the UE, the UE transmits the policy configuration request message carrying the relay communication mode to the AMF. The relay communication mode indicates a relay communication mode supported by the UE or a relay communication mode that the UE tends to use. If the relay communication mode includes the layer 2 relay communication mode, it means that the UE supports the layer 2 relay communication mode or tends to use the layer 2 relay communication mode. If the relay communication mode includes the layer 3 relay communication mode, it means that the UE supports the layer 3 relay communication mode or tends to use the layer 3 relay communication mode. If the relay communication mode includes the layer 2 and layer 3 relay communication modes, it means that the LTE supports both the two relay communication modes or tends to use both the two relay communication modes.

Afterwards, the AMF reports, to the PCF, the relay communication mode reported by the UE, and the PCF determines, based on the relay communication mode reported by the UE, the relay communication policy and authorization parameter corresponding to the relay communication mode, and the PCF configures the relay communication policy and authorization parameter to the LTE through a configuration update procedure.

It should be noted that the method for configuring relay communication information provided in the embodiments of this application may be performed by an apparatus for configuring relay communication information or a module for loading and performing the method for configuring relay communication information in the apparatus for configuring relay communication information. In the embodiments of this application, the apparatus for configuring relay communication information loading and performing the method for configuring relay communication information is used as an example to describe the method for configuring relay communication information provided in the embodiments of this application.

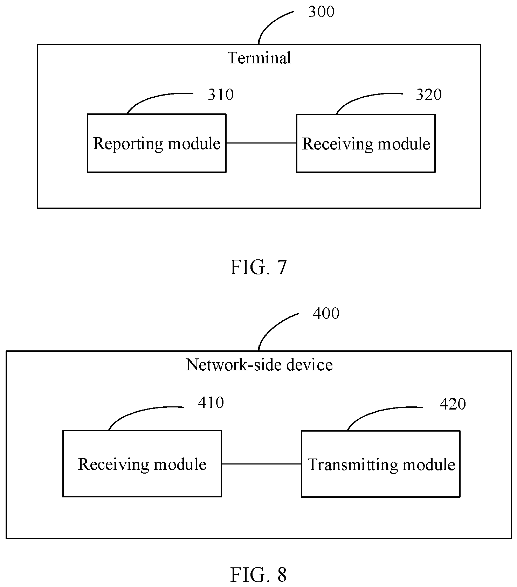

An embodiment of this application provides an apparatus for configuring relay communication information, applied to a terminal 300. As shown in FIG. 7, the apparatus includes:
a reporting module 310, configured to report a relay communication mode to a network-side device; and
a receiving module 320, configured to receive relay communication information from the network-side device, where the relay communication information includes a relay communication policy and/or authorization parameter corresponding to the relay communication mode.

In this embodiment of this application, the terminal may report a relay communication mode that the terminal supports and/or tends to use to the network-side device, so that the network-side device configures a relay communication policy and/or authorization parameter for the terminal based on the relay communication mode that the terminal supports and/or tends to use. This avoids that the network side configures a wrong or redundant relay communication policy and/or authorization parameter for the terminal because the network side does not know the relay communication mode supported by the terminal. Alternatively, this avoids that the network side configures a wrong or redundant relay communication policy and/or authorization parameter for the terminal because the network side does not know the relay communication mode that the terminal tends to use (UE may choose a relay communication mode from the perspective of service security, service continuity, payment, and the like).

In some embodiments, the reporting module 310 is specifically configured to perform any one of the following:
transmitting a registration message to the network-side device, where the registration message carries the relay communication mode; and
transmitting a policy configuration request message to the network-side device, where the policy configuration request message carries the relay communication mode.

In some embodiments, the receiving module 320 is specifically configured to receive a configuration update command from the network-side device, where the configuration update command includes the relay communication information.

In some embodiments, the relay communication mode includes at least one of the following:
layer 2 relay communication mode; and
layer 3 relay communication mode.

In some embodiments, the relay communication mode reported by the terminal includes a relay communication mode supported by the terminal and/or a relay communication mode that the terminal tends to use.

In some embodiments, the relay communication policy and/or authorization parameter includes at least one of the following:
a relay discovery policy;
a relay discovery authorization parameter;
a relay connection establishment policy; and
a parameter for relay connection establishment authorization.

The apparatus for configuring relay communication information in this embodiment of this application may be an apparatus or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA), or the like. The non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The apparatus for configuring relay communication information in this embodiment of this application may be an apparatus with an operating system. The operating system may be an android (Android) operating system, may be an iOS operating system, or may be another possible operating system. This is not specifically limited in the embodiments of this application.

It should be noted that the method for configuring relay communication information provided in the embodiments of this application may be performed by an apparatus for configuring relay communication information or a module for loading and performing the method for configuring relay communication information in the apparatus for configuring relay communication information. In the embodiments of this application, the apparatus for configuring relay communication information loading and performing the method for configuring relay communication information is used as an example to describe the method for configuring relay communication information provided in the embodiments of this application.

An embodiment of this application provides an apparatus for configuring relay communication information, applied to a network-side device 400. As shown in FIG. 8, the apparatus includes:
a receiving module 410, configured to receive a relay communication mode reported by a terminal; and
a transmitting module 420, configured to transmit relay communication information to the terminal, where the relay communication information includes a relay communication policy and/or authorization parameter corresponding to the relay communication mode.

In this embodiment of this application, the terminal may report a relay communication mode that the terminal supports and/or tends to use to the network-side device, so that the network-side device configures a relay communication policy and/or authorization parameter for the terminal based on the relay communication mode that the terminal supports and/or tends to use. This avoids that the network side configures a wrong or redundant relay communication policy and/or authorization parameter for the terminal because the network side does not know the relay communication mode supported by the terminal. Alternatively, this avoids that the network side configures a wrong or redundant relay communication policy and/or authorization parameter for the terminal because the network side does not know the relay communication mode that the terminal tends to use (UE may choose a relay communication mode from the perspective of service security, service continuity, payment, and the like).

In some embodiments, the relay communication mode includes at least one of the following:
layer 2 relay communication mode; and
layer 3 relay communication mode.

In some embodiments, the relay communication mode reported by the terminal includes a relay communication mode supported by the terminal and/or a relay communication mode that the terminal tends to use.

In some embodiments, the relay communication policy and/or authorization parameter includes at least one of the following:
a relay discovery policy;
a relay discovery authorization parameter;
a relay connection establishment policy; and
a parameter for relay connection establishment authorization.

The apparatus for configuring relay communication information in this embodiment of this application may be an apparatus with an operating system. The operating system may be an android (Android) operating system, may be an iOS operating system, or may be another possible operating system. This is not specifically limited in the embodiments of this application.

Optionally, an embodiment of this application further provides an electronic device, including a processor, a memory, and a program or instructions stored in the memory and capable of running on the processor. When the program or instructions are executed by the processor, the processes of the embodiments of the foregoing method for configuring relay communication information are implemented, with the same technical effects achieved. To avoid repetition, details are not described herein again.

It should be noted that the electronic device in this embodiment of this application includes the foregoing mobile electronic device and non-mobile electronic device.

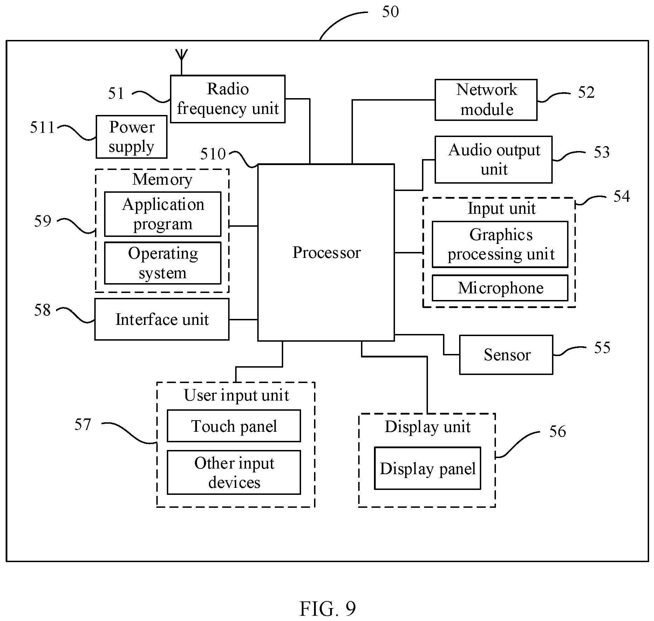

The electronic device in this embodiment may be a terminal. FIG. 9 is a schematic diagram of a hardware structure of a terminal for implementing the embodiments of this application. The terminal 50 includes but is not limited to components such as a radio frequency unit 51, a network module 52, an audio output unit 53, an input unit 54, a sensor 55, a display unit 56, a user input unit 57, an interface unit 58, a memory 59, a processor 510, and a power supply 511. Those skilled in the art may understand that the terminal structure shown in FIG. 9 does not constitute a limitation to the terminal. The terminal may include more or fewer components than shown in the figure, or combine some components, or have different component arrangements. In this embodiment of this application, the terminal includes but is not limited to a mobile phone, a tablet computer, a laptop computer, a palmtop computer, a vehicle-mounted mobile terminal, a wearable device, and a pedometer.

It should be understood that in this embodiment of this application, the radio frequency unit 51 may be configured to receive and send information, or to receive and send a signal in a call process, and specially, after receiving downlink data from a base station, send the downlink data to the processor 510 for processing; and also send uplink data to the base station. Generally, the radio frequency unit 51 includes but is not limited to an antenna, at least one amplifier, a transceiver, a coupler, a low noise amplifier, and a duplexer. In addition, the radio frequency unit 51 may further communicate with another device by using a wireless communication system and network.

The memory 59 may be configured to store software programs and various data. The memory 59 may mainly include a program storage area and a data storage area. The program storage area may store an operating system, an application program required by at least one function (for example, an audio playing function and an image playing function), and the like. The data storage area may store data (for example, audio data and an address book) created according to use of the mobile phone. In addition, the memory 59 may include a high-speed random access memory, and may further include a non-volatile memory, for example, at least one magnetic disk storage device, a flash storage device, or another volatile solid-state storage device.

The processor 510 is a control center of the terminal, and is connected to all parts of the entire terminal via various interfaces and lines. By running or executing a software program and/or a module that is stored in the memory 59 and invoking data stored in the memory 59, the processor 510 performs various functions of the terminal and data processing, so as to perform overall monitoring on the terminal. The processor 510 may include one or at least two processing units. Preferably, the processor 510 may integrate an application processor and a modem processor. The application processor mainly processes an operating system, a user interface, an application program, and the like. The modem processor mainly processes wireless communication. It can be understood that the modem processor may alternatively be not integrated in the processor 510.

The terminal 50 may further include the power supply 511 (for example, a battery) that supplies power to various components. Preferably, the power supply 511 may be logically connected to the processor 510 through a power supply management system, so that functions such as charging and discharging management and power consumption management are implemented by using the power management system.

In addition, the terminal 50 includes some function modules that are not shown. Details are not described herein.

In some embodiments, the processor 510 is specifically configured to: report a relay communication mode to a network-side device; and receive relay communication information from the network-side device, where the relay communication information includes a relay communication policy and/or authorization parameter corresponding to the relay communication mode.

In some embodiments, the processor 510 is specifically configured to perform any one of the following:
transmitting a registration message to the network-side device, where the registration message carries the relay communication mode; and
transmitting a policy configuration request message to the network-side device, where the policy configuration request message carries the relay communication mode.

In some embodiments, the processor 510 is specifically configured to receive a configuration update command from the network-side device, where the configuration update command includes the relay communication information.

In some embodiments, the relay communication mode includes at least one of the following:
layer 2 relay communication mode; and
layer 3 relay communication mode.

In some embodiments, the relay communication mode reported by the terminal includes a relay communication mode supported by the terminal and/or a relay communication mode that the terminal tends to use.

In some embodiments, the relay communication policy and/or authorization parameter includes at least one of the following:
a relay discovery policy;
a relay discovery authorization parameter;
a relay connection establishment policy; and
a parameter for relay connection establishment authorization.

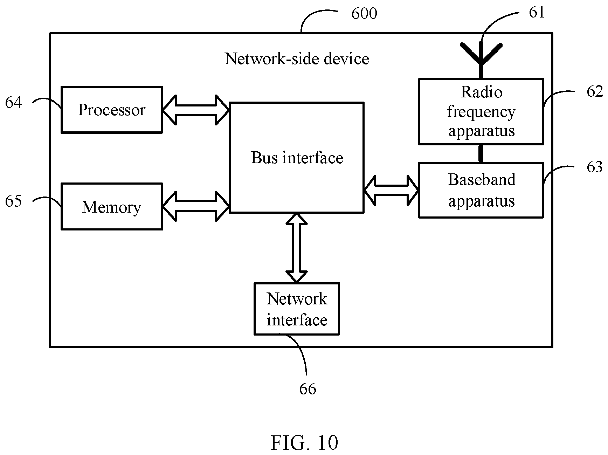

The electronic device in this embodiment may alternatively be a network-side device. As shown in FIG. 10, the network-side device 600 includes an antenna 61, a radio frequency apparatus 62, and a baseband apparatus 63. The antenna 61 is connected to the radio frequency apparatus 62. In an uplink direction, the radio frequency apparatus 62 receives information by using the antenna 61, and sends the received information to the baseband apparatus 63 for processing. In a downlink direction, the baseband apparatus 63 processes to-be-sent information, and sends the information to the radio frequency apparatus 62; and the radio frequency apparatus 62 processes the received information and then sends the information by using the antenna 61.

The radio frequency apparatus 62 may be located in the baseband apparatus 63. The method performed by the network-side device in the foregoing embodiment may be implemented in the baseband apparatus 63, and the baseband apparatus 63 includes a processor 64 and a memory 65.

The baseband apparatus 63 may include, for example, at least one baseband processing unit, where a plurality of chips are disposed on the baseband processing unit. As shown in FIG. 10, one of the chips is, for example, the processor 64, and connected to the memory 65, to invoke the program in the memory 65 to perform the operations of the network-side device shown in the foregoing method embodiments.

The baseband apparatus 63 may further include a network interface 66, configured to exchange information with the radio frequency apparatus 62, where the interface is, for example, a common public radio interface (common public radio interface, CPRI).

The processor herein may be one processor, or may be a collective term for a plurality of processing components. For example, the processor may be a CPU, or may be an ASIC, or may be one or more integrated circuits configured to implement the method performed by the network-side device, for example, one or more microprocessors DSP, or one or more field programmable gate arrays FPGA. A storage component may be a memory, or may be a collective term for a plurality of storage components.

The memory 65 may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch Link DRAM, SLDRAM), and a direct rambus random access memory (Direct Rambus RAM, DRRAM). The memory 65 described in this application is intended to include but is not limited to these and any other suitable types of memories.

In some embodiments, the processor 64 is specifically configured to: receive a relay communication mode reported by a terminal; and transmit relay communication information to the terminal, where the relay communication information includes a relay communication policy and/or authorization parameter corresponding to the relay communication mode.

In some embodiments, the relay communication mode includes at least one of the following:
layer 2 relay communication mode; and
layer 3 relay communication mode.

In some embodiments, the relay communication mode reported by the terminal includes a relay communication mode supported by the terminal and/or a relay communication mode that the terminal tends to use.

In some embodiments, the relay communication policy and/or authorization parameter includes at least one of the following:
a relay discovery policy;
a relay discovery authorization parameter;
a relay connection establishment policy; and
a parameter for relay connection establishment authorization.

An embodiment of this application further provides a readable storage medium, where the readable storage medium stores a program or instructions, and when the program or instructions are executed by a processor, the processes of the embodiments of the foregoing method for configuring relay communication information are implemented, with the same technical effects achieved. To avoid repetition, details are not described herein again.

The processor is the processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the embodiments of the foregoing method for configuring relay communication information, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a program product, where the program product is stored in a non-volatile readable storage medium, and when the computer program product is executed by a processor, the processes of the embodiments of the foregoing method for configuring relay communication information are implemented, with the same technical effects achieved. To avoid repetition, details are not described herein again.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In absence of more restrictions, an element preceded by "includes a ..." does not preclude the existence of other identical elements in the process, method, article, or apparatus that includes the element. In addition, it should be noted that the scopes of the method and apparatus in the embodiments of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the embodiments, persons skilled in the art may clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners shall fall within the protection scope of this application.

## Claims

1. A method for configuring relay communication information, comprising:
reporting, by a terminal, a relay communication mode to a network-side device; and
receiving, by the terminal, relay communication information from the network-side device, wherein the relay communication information comprises a relay communication policy and/or authorization parameter corresponding to the relay communication mode.

2. The method for configuring relay communication information according to claim 1, wherein the reporting, by a terminal, a relay communication mode to a network-side device comprises any one of the following:
transmitting, by the terminal, a registration message to the network-side device, wherein the registration message carries the relay communication mode; and
transmitting, by the terminal, a policy configuration request message to the network-side device, wherein the policy configuration request message carries the relay communication mode.

3. The method for configuring relay communication information according to claim 1, wherein the receiving, by the terminal, relay communication information from the network-side device comprises: receiving, by the terminal, a configuration update command from the network-side device, wherein the configuration update command comprises the relay communication information.

4. The method for configuring relay communication information according to claim 1, wherein the relay communication mode comprises at least one of the following:
layer 2 relay communication mode; and
layer 3 relay communication mode.

5. The method for configuring relay communication information according to claim 1, wherein the relay communication mode reported by the terminal comprises a relay communication mode supported by the terminal and/or a relay communication mode that the terminal tends to use.

6. The method for configuring relay communication information according to claim 1, wherein the relay communication policy and/or authorization parameter comprises at least one of the following:
a relay discovery policy;
a relay discovery authorization parameter;
a relay connection establishment policy; and
a parameter for relay connection establishment authorization.

7. A method for configuring relay communication information, comprising:
receiving, by a network-side device, a relay communication mode reported by a terminal; and
transmitting, by the network-side device, relay communication information to the terminal, wherein the relay communication information comprises a relay communication policy and/or authorization parameter corresponding to the relay communication mode.

8. The method for configuring relay communication information according to claim 7, wherein the network-side device comprises an access and mobility management function AMF and a policy control function PCF, and the receiving, by a network-side device, a relay communication mode reported by a terminal comprises any one of the following:
receiving, by the AMF, a registration message from the terminal, wherein the registration message carries the relay communication mode, and transmitting, by the AMF, the relay communication mode to the PCF through a terminal policy control creation request or a terminal policy control update request; and
receiving, by the AMF, a policy configuration request message from the terminal, wherein the policy configuration request message carries the relay communication mode, and transmitting, by the AMF, the relay communication mode to the PCF through a terminal policy control update request.

9. The method for configuring relay communication information according to claim 8, wherein the transmitting, by the network-side device, relay communication information to the terminal comprises:
determining, by the PCF, relay communication information corresponding to the relay communication mode based on the relay communication mode reported by the terminal; and
transmitting, by the PCF, a configuration update command to the terminal, wherein the configuration update command comprises the relay communication information.

10. The method for configuring relay communication information according to claim 7, wherein the relay communication mode comprises at least one of the following:
layer 2 relay communication mode; and
layer 3 relay communication mode.

11. The method for configuring relay communication information according to claim 7, wherein the relay communication mode reported by the terminal comprises a relay communication mode supported by the terminal and/or a relay communication mode that the terminal tends to use.

12. The method for configuring relay communication information according to claim 7, wherein the relay communication policy and/or authorization parameter comprises at least one of the following:
a relay discovery policy;
a relay discovery authorization parameter;
a relay connection establishment policy; and
a parameter for relay connection establishment authorization.

13. An apparatus for configuring relay communication information, applied to a terminal and comprising:
a reporting module, configured to report a relay communication mode to a network-side device; and
a receiving module, configured to receive relay communication information from the network-side device, wherein the relay communication information comprises a relay communication policy and/or authorization parameter corresponding to the relay communication mode.

14. The apparatus for configuring relay communication information according to claim 13, wherein the reporting module is specifically configured to perform any one of the following:
transmitting a registration message to the network-side device, wherein the registration message carries the relay communication mode; and
transmitting a policy configuration request message to the network-side device, wherein the policy configuration request message carries the relay communication mode.

15. The apparatus for configuring relay communication information according to claim 13, wherein the receiving module is specifically configured to receive a configuration update command from the network-side device, wherein the configuration update command comprises the relay communication information.

16. The apparatus for configuring relay communication information according to claim 13, wherein the relay communication mode comprises at least one of the following:
layer 2 relay communication mode; and
layer 3 relay communication mode.

17. The apparatus for configuring relay communication information according to claim 13, wherein the relay communication mode reported by the terminal comprises a relay communication mode supported by the terminal and/or a relay communication mode that the terminal tends to use.

18. The apparatus for configuring relay communication information according to claim 13, wherein the relay communication policy and/or authorization parameter comprises at least one of the following:
a relay discovery policy;
a relay discovery authorization parameter;
a relay connection establishment policy; and
a parameter for relay connection establishment authorization.

19. An apparatus for configuring relay communication information, applied to a network-side device and comprising:
a receiving module, configured to receive a relay communication mode reported by a terminal; and
a transmitting module, configured to transmit relay communication information to the terminal, wherein the relay communication information comprises a relay communication policy and/or authorization parameter corresponding to the relay communication mode.

20. The apparatus for configuring relay communication information according to claim 19, wherein the relay communication mode comprises at least one of the following:
layer 2 relay communication mode; and
layer 3 relay communication mode.

21. The apparatus for configuring relay communication information according to claim 19, wherein the relay communication mode reported by the terminal comprises a relay communication mode supported by the terminal and/or a relay communication mode that the terminal tends to use.

22. The apparatus for configuring relay communication information according to claim 19, wherein the relay communication policy and/or authorization parameter comprises at least one of the following:
a relay discovery policy;
a relay discovery authorization parameter;
a relay connection establishment policy; and
a parameter for relay connection establishment authorization.

23. An electronic device, comprising a processor, a memory, and a program or instructions stored in the memory and capable of running on the processor, wherein when the program or instructions are executed by the processor, the steps of the method according to any one of claims 1 to 6 are implemented or the steps of the method according to any one of claims 7 to 12 are implemented.

24. A readable storage medium, wherein the readable storage medium stores a program or instructions, and when the program or instructions are executed by a processor, the steps of the method according to any one of claims 1 to 6 are implemented or the steps of the method according to any one of claims 7 to 12 are implemented.

25. A chip, comprising a processor and a communication interface, wherein the communication interface is coupled to the processor, and the processor is configured to run a program or instructions to implement the steps of the method according to any one of claims 1 to 6 or the steps of the method according to any one of claims 7 to 12.

26. An electronic device, configured to perform the steps of the method according to any one of claims 1 to 6 or the steps of the method according to any one of claims 7 to 12.

27. A program product, wherein the program product stores a non-transitory readable storage medium, and when the program product is executed by a processor, the steps of the method according to any one of claims 1 to 6 are implemented or the steps of the method according to any one of claims 7 to 12 are implemented.
